(19) Europäisches Patentamt
European Patent Office
Office européen des brevets

(11) **EP 3 260 287 B1**

(12) **EUROPEAN PATENT SPECIFICATION**

(45) Date of publication and mention
of the grant of the patent:
**06.01.2021 Bulletin 2021/01**

(21) Application number: **17177391.4**

(22) Date of filing: **22.06.2017**

(51) Int Cl.:
*B32B 5/02* *(2006.01)*      *B32B 5/14* *(2006.01)*
*B32B 27/08* *(2006.01)*      *B32B 27/12* *(2006.01)*
*B32B 27/18* *(2006.01)*      *B32B 27/32* *(2006.01)*
*B32B 37/08* *(2006.01)*      *B32B 3/30* *(2006.01)*
*B60R 13/00* *(2006.01)*      *B29L 31/30* *(2006.01)*
*B29K 311/10* *(2006.01)*      *B29C 43/14* *(2006.01)*
*B29C 43/18* *(2006.01)*      *B29K 105/06* *(2006.01)*

(54) **METHOD FOR FINISHING A VISIBLE SIDE OF AN INTERIOR PART OF PRESSED FIBER MATERIAL AND INTERIOR PART HAVING SUCH A FINISHED VISIBLE SIDE**

VERFAHREN ZUR NACHBEHANDLUNG DER SICHTSEITE EINES INNENTEILS AUS EINEM ABGEPRESSTEN FASERIGEN WERKSTOFF UND EIN INNENTEIL MIT EINER DERARTIGR NACHBEHANDELTE SICHTSEITE

PROCÉDÉ DE FINITION DE LA FACE VISIBLE D'UNE PARTIE INTÉRIEUR EN MATIÈRE FIBREUSE PRESSURÉE ET UNE PARTIE INTÉRIEUR D'UN TELLE FINITION DE LA FACE VISIBLE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.06.2016 NL 2017025**

(43) Date of publication of application:
**27.12.2017 Bulletin 2017/52**

(73) Proprietor: **Apeldoorn Flexible Packaging B.V.**
**7336 AZ Apeldoorn (NL)**

(72) Inventors:
• **BUIT, Marnix Elmar**
**3823 TH AMERSFOORT (NL)**

• **VAN ORIZANDE, Johan**
**7323 LB APELDOORN (NL)**
• **VAN DE VOSSE, John**
**7131 VA LICHTENVOORDE (NL)**

(74) Representative: **Bartelds, Erik et al**
**Arnold & Siedsma**
**Bezuidenhoutseweg 57**
**2594 AC The Hague (NL)**

(56) References cited:
**WO-A1-2015/079637      WO-A2-2011/134983**

## Description

The invention relates to a method for finishing a visible side of an interior part of pressed fibre material and to an interior part having such a finished visible side. The invention relates particularly to a method as described in the preamble of claim 1 and an interior part as described in the preamble of claim 11.

It is known conventionally to manufacture interior parts, for instance parts of the interior of a motor vehicle, from plastic. Harder or softer plastics are used here depending on the location of the respective part in the interior and the price class of the associated motor vehicle. It is also conventionally known to cover interior parts in motor vehicles with wood veneer, while for some vehicles in the higher price classes finishes are also found in real wood coated with one or more layers of clear varnish. In vehicles with a more sporty look interior parts are often provided with an imprint which imitates the surface of a carbon fibre panel, while in more expensive vehicles real carbon fibre panels are also applied. Finally, it is known to cover interior parts of vehicles in the higher price class with leather.

In recent years use has increasingly been made of pressed fibre materials for interior parts, wherein particularly materials on the basis of natural fibres are gaining in popularity. This is associated with the increasing demand for sustainable production methods and with minimizing the use of scarce raw materials such as are necessary for the production of plastic components. Components of pressed fibre material can however not be applied as a matter of course in a vehicle because their surface is not suitable to function as outer layer. These surfaces are for example usually porous and relatively rough, whereby they have an unpleasant feel and wear quickly.

Interior parts manufactured from pressed fibre material must therefore be covered with one or more protective layers. Because the appearance of pressed fibre material is not particularly attractive, use has often been made heretofore for covering thereof of a textile material which is glued onto the visible side of the interior part of pressed fibre material. This is relatively labour-intensive and requires a considerable amount of material in addition to the pressed fibre material of the interior part itself. Textile material is moreover not stretchable, or hardly so, whereby there is the risk that it will tear when an interior part covered therewith is pressed to a desired final shape.

Already described in WO 2011/134983 A1 is an interior component of pressed fibre material which is covered with multilayer transparent film, whereby the pressed fibre material is protected in liquid-tight and scratch-resistant manner from the surroundings. A layer of the film making contact with the fibre material is manufactured here from the same plastic as the matrix in which the fibres are incorporated, while layers thereabove can optionally be coloured. While this is a relatively simple manner of finishing the pressed fibre material which requires little extra material and relatively little effort, the appearance of the resulting interior component leaves something to be desired.

The invention now has for its object to provide a method for finishing a visible side of an interior part of pressed fibre material wherein the stated drawbacks do not occur, or at least do so to lesser extent. According to the present invention this is achieved with a method as described in the preamble of claim 1 in that the coloured material is a film of coloured material which is pressed directly onto the pressed fibre material at the visible side of the interior part.

Owing to the coloured material the pattern of the relief becomes visible, whereby the appearance of the interior part is enhanced or embellished so that the interior part is suitable for use in motor vehicles. By being supplied in the form of a film the coloured material can be arranged very easily on the visible side. Because the film-like coloured material is pressed directly onto the visible side of the interior part, so without interposing of other layers, the dye from the film can penetrate the fibre material. Because the fibre material is more strongly compressed in the recessed parts of the relief than in the higher parts of the visible side, the surface of the recessed parts is relatively more dense than the surface of the non-recessed parts, whereby the dye will penetrate the fibre material less easily there. The recessed parts of the relief are hereby visible in the final interior part due to a higher degree of colouring than in the higher parts of the visible side.

The relief can be formed in simple manner in the visible side of the interior part by pressing.

According to a first aspect of the method, the relief is pressed in a first operation into the visible side and the film is pressed in a subsequent operation directly onto and into the relief. The starting material for the interior part will in practice often have to be pressed to the desired thickness and final shape in multiple steps so that these pressing operations can then be used simultaneously in efficient manner to form the relief and to arrange the coloured film material.

It is on the other hand also possible to envisage pressing of the relief into the visible side and pressing of the film directly onto or into the relief being performed in a single operation. An efficient method is thus obtained which can be performed relatively quickly, easily and at low cost.

In some embodiments it can also be worthwhile - after pressing in the relief and pressing on the film in a single operation - to subject the interior part to an additional pressing operation.

For an optimal effect it is preferred that the coloured material has a colour differing from the colour of the visible side of the pressed fibre material.

In view of the different functions the film must fulfil, it can be advantageous for the film to comprise a number of layers.

In order to achieve a particularly striking result the layers of the film in that case have different colours.

The film is advantageously a plastic film. Plastic films are generally not very costly and can be manufactured in substantially any desired thickness, desired quality and desired size, wherein substantially any desired property can also be incorporated.

In order to retain some part of the natural appearance of the pressed fibre material the film can be at least partially translucent or transparent.

In order to protect the pressed fibre material it is preferred that the film displays one or more of the following properties: liquid tightness, scratch resistance and/or UV resistance.

The pressed fibre material of the interior part can comprise fibres, in particular natural fibres, incorporated in a plastic matrix material. The use of natural fibres such as hemp, jute, kenaf, sisal or flax, results in a highly sustainable use of material. Thermoplastic plastics, thermosetting plastics and elastomers are suitable as matrix material.

As stated, the pressed fibre material must sometimes undergo multiple pressing operations in order to obtain the desired final thickness and final shape. The fibre material can for this purpose already be pre-pressed prior to forming of the relief.

The relief can advantageously be formed in a regular pattern in the visible side of the interior part. Regular patterns are less distracting to a driver than irregular patterns and are therefore preferred from the viewpoint of traffic safety when the interior part is applied in a motor vehicle.

As stated, pressing in the relief and/or pressing on the coloured film can form part of the pressing operations which the material has to undergo. The interior part can be pressed here into the desired final shape during one or more of the pressing operations.

The invention also relates to an interior part of pressed fibre material which is obtained by applying the above described method. An interior part as described in the preamble of claim 11 is characterized according to the invention in that the coloured material is a film of coloured material pressed directly onto the pressed fibre material at the visible side of the interior part.

Preferred embodiments of the interior part according to the invention form the subject-matter of the dependent claims 12-15.

The invention will now be elucidated on the basis of a number of examples, wherein reference is made to the accompanying figures, in which:

> Fig. 1A-C show schematically the steps with which a stack of fibre material is pre-pressed to a plate of a first thickness,
> Fig. 2A-C show schematically the steps with which a relief is pressed into a side of the plate of pre-pressed fibre material which will form the visible side of an interior part,
> Fig. 3A-C show schematically the steps with which a film is pressed onto and into the relief on the later visible side, wherein the thickness of the plate is further reduced,
Fig. 4A-C corresponds to Fig. 1A-C,
Fig. 5A-C show schematic views corresponding to Fig. 2A-C of the steps with which in a single processing run a relief is pressed into the side of the plate of pre-pressed fibre material which will form the visible side of an interior part and a film is simultaneously pressed onto and into the relief on the later visible side,
Fig. 6A-C show schematically the steps with which the pressed fibre material with the film is further pressed onto and into the relief on the later visible side, wherein the thickness of the plate is further reduced,
Fig. 7, Fig. 8 and Fig. 9 correspond to respectively Fig. 4, Fig. 5 and Fig. 6, but show how a plurality of layers of film are co-pressed during the forming of the relief,
Fig. 10 is a schematic perspective view of an interior part according to the invention,
Fig. 11 is a detail view along arrow XI in Fig. 10 showing the regular pattern of the relief formed in the visible side,
Fig. 12 shows a schematic section on enlarged scale through the visible side of the interior part of Fig. 10 and Fig. 11 which shows how the coloured material is distributed over the surface, and
Fig. 13 is a schematic top view showing a number of possible patterns which can be formed with the method according to the invention.

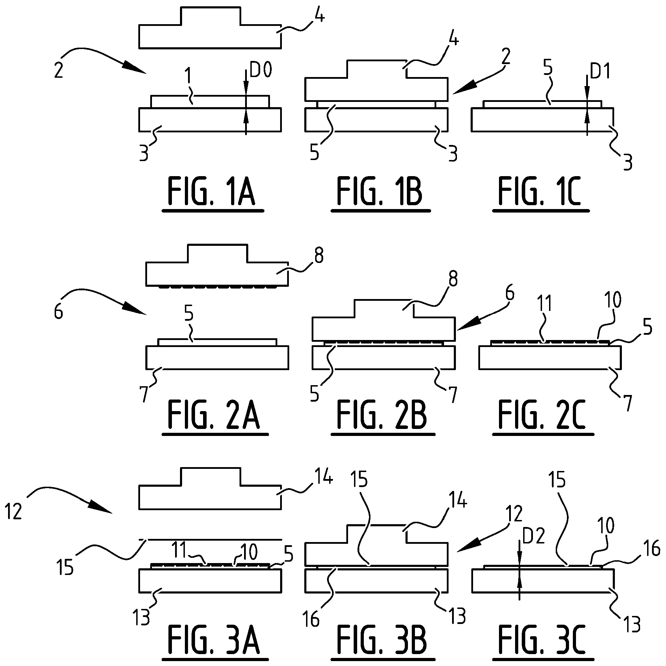

A method for finishing an interior part formed from a pressed fibre material begins in the shown embodiment with pre-pressing of the starting material, a stack 1 formed by fibres in a matrix material. The fibres in this embodiment can here be natural fibres such as kenaf, while a plastic such as polypropylene (PP) can be selected as matrix material. This stack 1 is laid onto a lower mould 3 of a press 2 (Fig. 1A), after which an upper mould 4 is moved toward lower mould 3 and stack 1 is compressed (Fig. 1B). Following compression or pressing a plate-like intermediate product 5 results with a reduced first thickness D1 (Fig. 1C) relative to a starting thickness D0 of stack 1. During the pre-pressing the starting material can also be already heated in order to melt the matrix material - in any case at least partially - whereby the fibres are bound in the matrix.

In a subsequent processing step the pre-pressed plate 5 can be placed on lower mould 7 of a second press 6 below an upper mould 8 provided with a profiled die 9 (Fig. 2A). When upper mould 8 is moved toward lower mould 7, profiled die 9 is pressed into upper side 10 of pre-pressed plate 5 (Fig. 2B). This upper side 10 is destined to form the visible side during use of the final interior part, i.e. the side which will be visible to persons seated in a motor vehicle in which the interior part is mounted. When the upper mould is taken away, plate 5 is left with a relief 11 in its upper side 10 - the later visible side. In the shown embodiment the thickness of plate 5 is not further reduced, or hardly so, in this second processing step.

Plate 5 with relief 11 in its upper side 10 is subsequently placed on a lower mould 13 of a third press 12, and a film 15 of coloured material is placed directly onto the still uncovered upper side 10 of the pressed fibre material (shown for the sake of clarity at a distance thereabove in Fig. 3A). When upper mould 14 of third press 12 is moved downward (Fig. 3B) and the press is simultaneously heated, film 15 is pressed directly onto and into relief 11 on the upper side/visible side of the plate. Because of the high temperature the matrix material melts and film 15 moreover adheres to upper side 10 of the plate. In addition, a part of the dye will in any case migrate from film 15 to the material of the plate, as will be elucidated below. The plate is compressed to an end product, the interior part 16, which has a second thickness D2 which is again smaller than the thickness D1 of the intermediate product (Fig. 3C):

$$D2 < D1 < D0$$

As shown schematically in Fig. 3C, the relief 11 in upper side 10, which now forms the visible side of interior part 16, is filled with the coloured material of film 15 after the final pressing operation.

Although a flat interior part 16 is formed in the shown embodiment, it will in practice not usually have a flat form. Interior part 16 is intended as functional and aesthetic covering of a part of the construction of a motor vehicle, and will therefore often have a complicated shape. In practice the lower and upper moulds 13, 14 of third press 12 will thus be profiled.

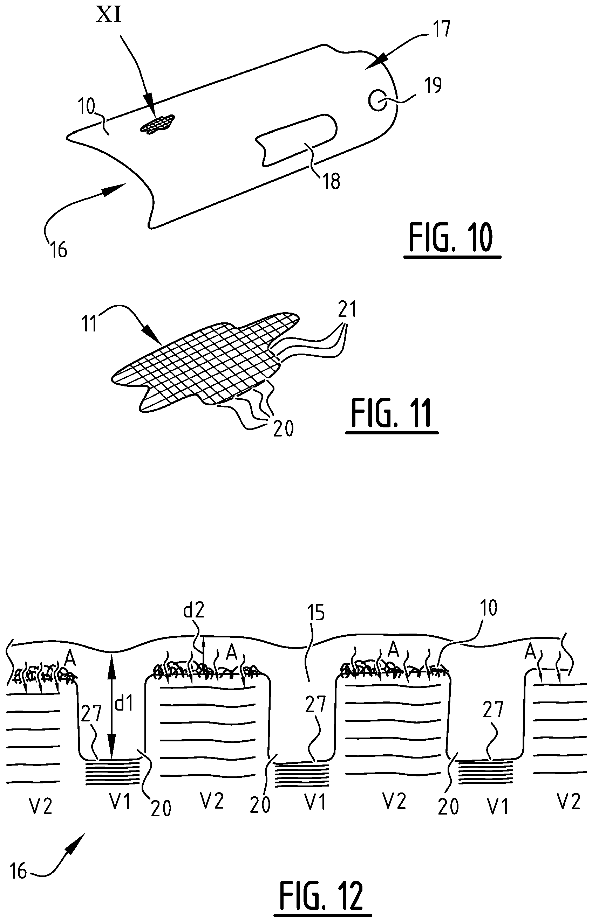

An example of an interior part 16 which can be formed by applying the above described method is shown in Fig. 10. Shown here is a part of a dashboard 17 which is provided in the shown example with cutaway portions 18, 19 for respectively a flap of a glove compartment and an outlet opening of a climate control system.

Fig. 11 shows a detail of visible side 10 of dashboard 17. Shown clearly herein is a regular pattern of relief 11 which is formed here by two series of mutually parallel grooves 20, 21, the recessed parts of relief 11. These grooves 20, 21 are readily visible because the material of film 15, which has a colour differing from the colour of the visible side 10 of the pressed fibre material, has accumulated therein.

The accumulation or collecting of the coloured material in grooves 20, 21 is the result of the local compression or compaction which the pressed fibre material has undergone at the location of grooves 20, 21. This is shown in the section on highly enlarged scale of Fig. 12, where the fibres V1 below the groove or the recessed part 20 of relief 11 are packed together more densely than fibres V2 below the rest of visible side 10. The bottom 27 of recessed part 20 is hereby relatively dense, while the other surfaces which come into direct contact with the coloured material of film 15 are less dense. The coloured material will thus partly penetrate (indicated with arrows A) the upper layer of visible side 10 between grooves 20, 21 where fibres are still exposed to which the coloured material will adhere. The colour of film 15 will hereby become less intense at these locations. Conversely, it is precisely in grooves 20, 21, which have a relatively dense and smooth bottom 27, that the coloured material will accumulate. The thickness d1 of the material layer in grooves 20, 21 is also considerably greater than the thickness d2 of the material layer on the fibres on the visible side 10 between the grooves:

$$d1 \gg d2$$

whereby the colour of grooves 20, 21 is deeper than that of the surrounding surface, and grooves 20, 21 will therefore stand out clearly.

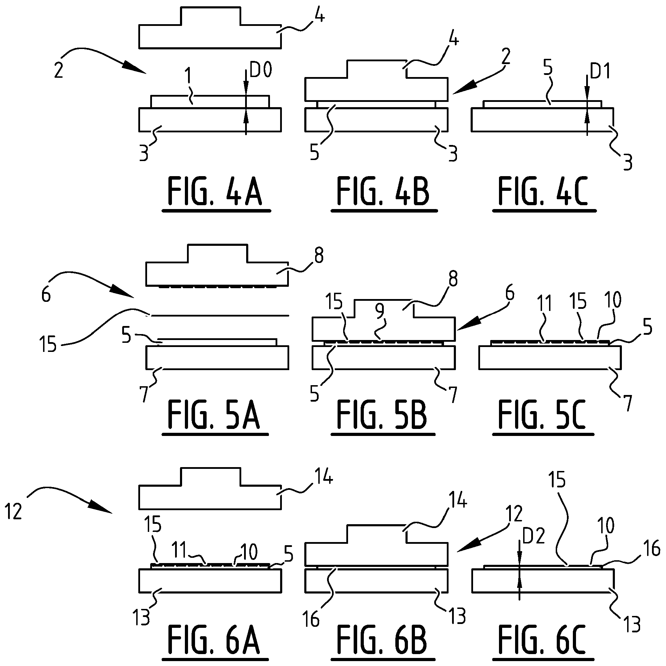

Although in the above described embodiment forming the relief 11 and arranging the film 15 of coloured material took place in two successive processing steps, both these operations can also be combined in a single processing run. Use is again made here of a stack 1 of fibres and matrix material which is pre-pressed in a first press 2 (Fig. 4A-C).

In a subsequent processing step the pre-pressed plate 5 is placed on lower mould 7 of a second press 6, once again below an upper mould 8 provided with a profiled die 9 (Fig. 5A). A film 15 of coloured material is then placed on upper side 10 (once again shown for the sake of clarity at a distance thereabove in Fig. 5A) which comes into direct contact with the pressed fibre material. When upper mould 9 is moved toward lower mould 7, profiled die 9 is pressed into upper side 10 of pre-pressed plate 5 with film 15 thereon (Fig. 5B). Because press 6 is simultaneously heated, film 15 is not only pressed onto and into the thus simultaneously formed relief 11 on upper side/visible side 10 of the plate, but film 15 also adheres immediately to upper side 10 of the plate. The material of film 15 is already distributed over the surface of the plate and the recessed parts of relief 11 (Fig. 5C).

In this variant of the method one more final processing step is necessary to finally press the pressed fibre material with relief 11 and film 15 to the desired thickness and shape of interior part 16. The plate with relief 11 and film 15 is for this purpose placed on lower mould 13 of a third press 12 (Fig. 6A) and, by moving upper mould 14 downward, the plate is compressed to form interior part 16. Film 15 and relief 11 can no longer be distinguished here in the schematic section of Fig. 6C, but the final result is similar to that of the first variant of the method as described above.

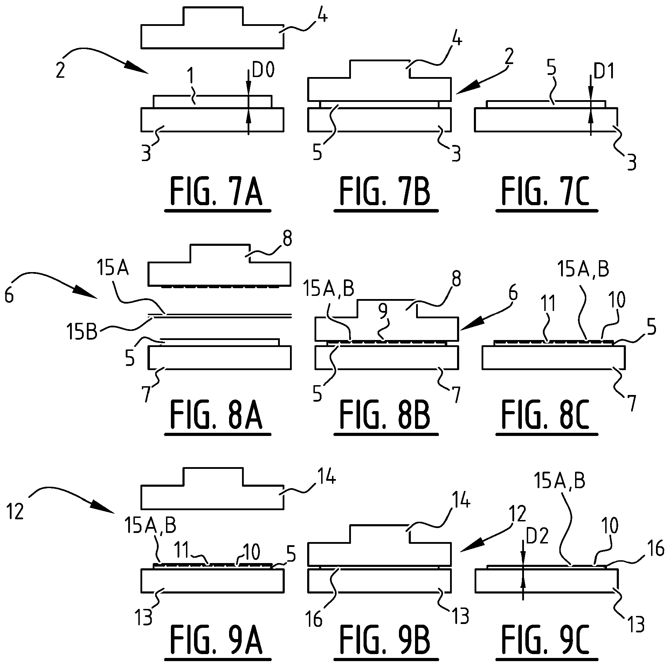

In yet another variant of the method as shown in Fig. 7 to Fig. 9, instead of a single film 15 a plurality of films, here two films 15A, 15B, are pressed onto the plate (Fig. 8A, Fig. 8B). These films 15A, 15B can each have a different colour, whereby a two-colour pattern can be formed. The recessed parts of the relief will in this case take on the colour of the upper or first film 15A, while the parts of visible side 10 lying therebetween will take on the colour of the lower or second film 15B. This comes about because second film 15B will adhere to the protruding fibres in the relatively open structure of visible side 10 between the recessed parts of the relief, and will thereby remain visible. This colour will also accumulate in the recessed parts of relief 11, although here the colour will be covered by the colour of first film 15A, which will likewise accumulate here. The colour of first film 15A can however no longer adhere to the fibres of visible side 10, which are after all already coated with second film 15B and will therefore not be present, or hardly so, in the parts of visible side 10 lying in relief 11.

As upper film 15 it is otherwise also possible in this variant to opt for a wholly transparent, colourless film which functions solely as cover layer. Only lower film 15B can in this case be coloured so that the same colouring is realized as in the first two variants. Upper film 15A can then serve for instance as scratch-resistant layer or as UV-resistant layer.

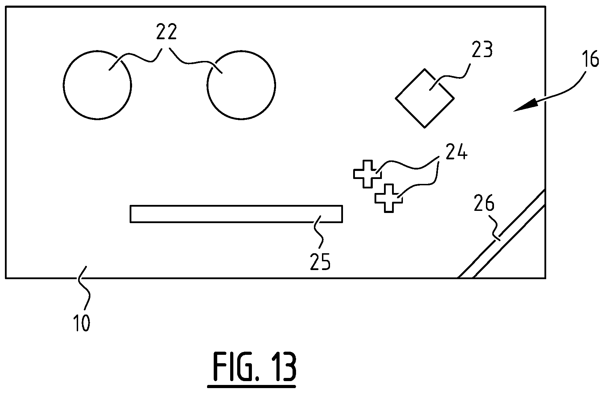

In the embodiments discussed up to this point use is made of a relief 11 in the form of a regular pattern of recessed parts or grooves 20, 21. The pattern can however also be formed the other way round, wherein the recessed parts are relatively large and a grid of upright edges remains therebetween. Relief 11 can however take any desired form and is not limited to repetitive and regular patterns. As shown in Fig. 13, the invention makes it possible to provide interior parts 16 with the most diverse figures in a contrasting colour. In addition to the shown geometric figures such as circle 22, square 23, cross 24, rectangle 25 and trapezium 26, random irregular and non-repetitive shapes can also be envisaged.

Although the invention has been elucidated above on the basis of a number of embodiments, it will be apparent that it is not limited thereto but can be varied in many ways. Reference has thus been made for instance up to this point to interior parts for motor vehicles, but the invention can also be applied to interior parts of other transport means such as aircraft and vessels, and even to other components of pressed fibre material. Starting materials other than discussed above can further be applied for the fibres and the matrix. In addition, the invention is not limited to the use on the visible side of an interior part, but the whole interior part could be finished in the described manner if this were to be desired for one reason or another.

The scope of the invention is therefore defined solely by the following claims.

## Claims

1. Method for finishing a visible side (10) of an interior part (16) of pressed fibre material, comprising of:

   forming a relief (11) in the visible side (10) of the interior part (16) by pressing, and
   arranging a coloured material at least in recessed parts of the relief (11),
   **characterized in that** the coloured material is a film (15) of coloured material which is pressed directly onto the pressed fibre material at the visible side (10) of the interior part (16).

2. Method as claimed in claim 1, **characterized in that** in a first operation the relief (11) is pressed into the visible side (10) and in a subsequent operation the film (15) is pressed directly onto and into the relief (11).

3. Method as claimed in claim 1, **characterized in that** pressing of the relief (11) into the visible side (10) and pressing of the film (15) directly onto or into the relief (11) are performed in a single operation, wherein after pressing in the relief (11) and pressing on the film (15) in a single operation the interior part (16) is optionally subjected to an additional pressing operation.

4. Method as claimed in any of the foregoing claims, **characterized in that** the coloured material has a colour differing from the colour of the visible side (10) of the pressed fibre material.

5. Method as claimed in any of the foregoing claims, **characterized in that** the film (15) comprises a number of layers (15A, 15B), wherein the layers (15A, 15B) of the film (15) have different colours.

6. Method as claimed in any of the foregoing claims, **characterized in that** the film (15) is a plastic film (15) and/or the film (15) is at least partially translucent or transparent and/or the film (15) displays one or more of the following properties:
   liquid tightness, scratch resistance and/or UV resistance.

7. Method as claimed in any of the foregoing claims, **characterized in that** the pressed fibre material of the interior part (16) comprises fibres, in particular natural fibres, incorporated in a plastic matrix material.

8. Method as claimed in any of the foregoing claims, **characterized in that** the fibre material is pre-pressed prior to forming of the relief (11).

9. Method as claimed in any of the foregoing claims, **characterized in that** the relief (11) is formed in a regular pattern in the visible side (10) of the interior part (16).

10. Method as claimed in any of the foregoing claims, **characterized in that** the interior part (16) is pressed into a desired final shape during one or more of the pressing operations.

11. Interior part (16) of pressed fibre material obtained by the method of claim 1.

12. Interior part (16) as claimed in claim 11, **characterized in that** the coloured material has a colour differing from the colour of the visible side (10) of the pressed fibre material.

13. Interior part (16) as claimed in claim 11 or 12, **characterized in that** the film (15) comprises a number of layers (15A, 15B), wherein the layers (15A, 15B) of the film (15) have different colours; and/or
the film (15) is a plastic film (15); and/or
the film (15) is at least partially translucent or transparent; and/or
the film (15) displays one or more of the following properties:
liquid tightness, scratch resistance and/or UV resistance.

14. Interior part (16) as claimed in any of the claims 11-13, **characterized in that** the pressed fibre material of the interior part (16) comprises fibres, in particular natural fibres, incorporated in a plastic matrix material.

15. Interior part (16) as claimed in any of the claims 11-14, **characterized in that** the relief (11) is formed in a regular pattern in the visible side (10) of the interior part (16).

**Patentansprüche**

1. Verfahren zur Endbearbeitung einer sichtbaren Seite (10) eines Innenteils (16) aus Pressfasermaterial, aufweisend die folgenden Schritte:

Bilden eines Reliefs (11) auf der sichtbaren Seite (10) des Innenteils (16) durch Pressen, und Anordnen eines farbigen Materials zumindest in Vertiefungen des Reliefs (11),
**dadurch gekennzeichnet, dass** das gefärbte Material eine Folie (15) aus farbigem Material darstellt, die direkt auf das gepresste Fasermaterial der sichtbaren Seite (10) des Innenteils (16) gepresst wird.

2. Verfahren nach Anspruch 1, **dadurch gekenn-**

**zeichnet, dass** in einem ersten Arbeitsschritt das Relief (11) in die sichtbare Seite (10) eingepresst wird und in einem nachfolgenden Arbeitsschritt die Folie (15) direkt auf und in das Relief (11) gepresst wird.

3. Verfahren nach Anspruch 1, **dadurch gekennzeichnet, dass** das Einpressen des Reliefs (11) in die sichtbare Seite (10) und das Pressen der Folie (15) direkt auf oder in das Relief (11) in einem einzigen Arbeitsschritt durchgeführt werden, wobei nach dem Einpressen des Reliefs (11) und dem Pressen der Folie (15) in einem einzigen Arbeitsschritt das Innenteil (16) optional einer zusätzlichen Pressung unterzogen wird.

4. Verfahren nach einem der vorhergehenden Ansprüche, **dadurch gekennzeichnet, dass** das farbige Material eine Farbe aufweist, die sich von der Farbe der sichtbaren Seite (10) des gepressten Fasermaterials unterscheidet.

5. Verfahren nach einem der vorhergehenden Ansprüche, **dadurch gekennzeichnet, dass** die Folie (15) eine Anzahl von Schichten (15A, 15B) aufweist, wobei die Schichten (15A, 15B) der Folie (15) unterschiedliche Farben aufweisen.

6. Verfahren nach einem der vorhergehenden Ansprüche, **dadurch gekennzeichnet, daß** die Folie (15) eine Kunststofffolie (15) ist und/oder die Folie (15) zumindest teilweise durchscheinend oder transparent ist und/oder die Folie (15) eine oder mehrere der folgenden Eigenschaften aufweist:
Flüssigkeitsdichtheit, Kratzfestigkeit und/oder UV-Beständigkeit.

7. Verfahren nach einem der vorhergehenden Ansprüche, **dadurch gekennzeichnet, daß** das gepreßte Fasermaterial des Innenteils (16) Fasern, insbesondere Naturfasern, umfaßt, die in ein Kunststoffmatrixmaterial eingearbeitet sind.

8. Verfahren nach einem der vorhergehenden Ansprüche, **dadurch gekennzeichnet, dass** das Fasermaterial vor dem Bilden des Reliefs (11) vorgepresst wird.

9. Verfahren nach einem der vorhergehenden Ansprüche, **dadurch gekennzeichnet, dass** das Relief (11) in einem regelmäßigen Muster auf der sichtbaren Seite (10) des Innenteils (16) ausgebildet wird.

10. Verfahren nach einem der vorhergehenden Ansprüche, **dadurch gekennzeichnet, dass** das Innenteil (16) während eines oder mehrerer Pressvorgänge in eine gewünschte Endform gepresst wird.

**11.** Innenteil (16) aus gepresstem Fasermaterial, das gemäß dem Verfahren nach Anspruch 1 erhalten wurde.

**12.** Innenteil (16) nach Anspruch 11, **dadurch gekennzeichnet, dass** das Material eine Farbe aufweist, die von der Farbe der sichtbaren Seite (10) des gepressten Fasermaterials abweicht.

**13.** Innenteil (16) nach Anspruch 11 oder 12, **dadurch gekennzeichnet, dass** die Folie (15) eine Anzahl von Schichten (15A, 15B) umfasst, wobei die Schichten (15A, 15B) der Folie (15) unterschiedliche Farben aufweisen; und/oder
die Folie (15) eine Kunststofffolie (15) ist; und/oder
die Folie (15) zumindest teilweise durchscheinend oder transparent ist; und/oder
die Folie (15) eine oder mehrere der folgenden Eigenschaften aufweist:
Flüssigkeitsdichtheit, Kratzfestigkeit und/oder UV-Beständigkeit.

**14.** Innenteil (16), nach einem der Ansprüche 11 bis 13, **dadurch gekennzeichnet, dass** das gepresste Fasermaterial des Innenteils (16) aus in ein Kunststoff-Matrixmaterial eingearbeiteten Fasern, insbesondere Naturfasern, besteht.

**15.** Innenteil (16), nach einem der Ansprüche 11 bis 14, **dadurch gekennzeichnet, daß** das Relief (11) in Form eines regelmäßigen Musters auf der sichtbaren Seite (10) des Innenteils (16) ausgebildet ist.

**Revendications**

**1.** Procédé de finition d'une face visible (10) d'une partie intérieure (16) de matériau fibreux pressé, comprenant :

la formation d'un relief (11) sur la face visible (10) de la partie intérieure (16) par pressage, et l'agencement d'un matériau coloré au moins dans les parties en creux du relief (11), **caractérisé en ce que** le matériau coloré est un film (15) du matériau coloré qui est pressé directement sur le matériau fibreux pressé au niveau de la face visible (10) de la partie intérieure (16).

**2.** Procédé selon la revendication 1, **caractérisé en ce que**, dans une première opération, le relief (11) est pressé dans la face visible (10) et, dans une opération suivante, le film (15) est pressé directement sur et dans le relief (11).

**3.** Procédé selon la revendication 1, **caractérisé en ce que** le pressage du relief (11) dans la face visible (10) et le pressage du film (15) directement sur ou dans le relief (11) sont exécutés en une seule opération, dans lequel, après le pressage dans le relief (11) et le pressage sur le film (15) en une seule opération, la partie intérieure (16) est, en variante, soumise à une opération de pressage supplémentaire.

**4.** Procédé selon l'une quelconque des revendications précédentes, **caractérisé en ce que** le matériau coloré présente une couleur différente de la couleur de la face visible (10) du matériau fibreux pressé.

**5.** Procédé selon l'une quelconque des revendications précédentes, **caractérisé en ce que** le film (15) comprend un certain nombre de couches (15A, 15B), dans lequel les couches (15A, 15B) du film (15) présentent différentes couleurs.

**6.** Procédé selon l'une quelconque des revendications précédentes, **caractérisé en ce que** le film (15) est un film en matière plastique (15) et/ou le film (15) est au moins partiellement translucide ou transparent et/ou le film (15) présente une ou plusieurs des propriétés suivantes :
l'étanchéité au liquide, la résistance aux rayures et/ou la résistance aux UV.

**7.** Procédé selon l'une quelconque des revendications précédentes, **caractérisé en ce que** le matériau fibreux pressé de la partie intérieure (16) comprend des fibres, en particulier, des fibres naturelles, incorporées dans une matière plastique de matrice.

**8.** Procédé selon l'une quelconque des revendications précédentes, **caractérisé en ce que** le matériau fibreux est préalablement pressé avant la formation du relief (11).

**9.** Procédé selon l'une quelconque des revendications précédentes, **caractérisé en ce que** le relief (11) est formé suivant un motif régulier sur la face visible (10) de la partie intérieure (16).

**10.** Procédé selon l'une quelconque des revendications précédentes, **caractérisé en ce que** la partie intérieure (16) est pressée en une forme désirée finale au cours d'une ou plusieurs des opérations de pressage.

**11.** Partie intérieure (16) de matériau fibreux pressé obtenue par le procédé selon la revendication 1.

**12.** Partie intérieure (16) selon la revendication 11, **caractérisée en ce que** le matériau coloré présente des couleurs différentes de la couleur de la face visible (10) du matériau fibreux pressé.

**13.** Partie intérieure (16) selon la revendication 11 ou 12, **caractérisée en ce que** le film (15) comprend un certain nombre de couches (15A, 15B), dans laquelle les couches (15A, 15B) du film (15) présentent des couleurs différentes ; et/ou

le film (15) est un film en matière plastique (15) ; et/ou

le film (15) est au moins partiellement translucide ou transparent ; et/ou

le film (15) présente une ou plusieurs des propriétés suivantes :

l'étanchéité au liquide, la résistance aux rayures et/ou la résistance aux UV.

14. Partie intérieure (16) selon l'une quelconque des revendications 11 à 13, **caractérisée en ce que** le matériau fibreux pressé de la partie intérieure (16) comprend des fibres, en particulier, des fibres naturelles, incorporées dans une matière plastique de matrice.

15. Partie intérieure (16) selon l'une quelconque des revendications 11 à 14, **caractérisée en ce que** le relief (11) est formé suivant un motif régulier sur la face visible (10) de la partie intérieure (16).

FIG. 1A   FIG. 1B   FIG. 1C

FIG. 2A   FIG. 2B   FIG. 2C

FIG. 3A   FIG. 3B   FIG. 3C

EP 3 260 287 B1

FIG. 4A    FIG. 4B    FIG. 4C

FIG. 5A    FIG. 5B    FIG. 5C

FIG. 6A    FIG. 6B    FIG. 6C

EP 3 260 287 B1

FIG. 7A   FIG. 7B   FIG. 7C

FIG. 8A   FIG. 8B   FIG. 8C

FIG. 9A   FIG. 9B   FIG. 9C

FIG. 10

FIG. 11

FIG. 12

## FIG. 13

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2011134983 A1